(19) **Europäisches Patentamt**

**European Patent Office**

**Office européen des brevets**

(11) **EP 1 043 374 B1**

(12) **FASCICULE DE BREVET EUROPEEN**

(45) Date de publication et mention
de la délivrance du brevet:
**17.12.2003 Bulletin 2003/51**

(51) Int Cl.⁷: **C09J 151/06**, C09J 123/16,
C08L 51/06, B32B 7/12

(21) Numéro de dépôt: **00400855.3**

(22) Date de dépôt: **29.03.2000**

(54) **Liant de coextrusion, son utilisation pour une structure multicouche et la structure ainsi obtenue**

Koextrusionbindung, die Verwendung für eine Multischichtstruktur und die Struktur hergestellt davon

Coextrusion binder adhesive, it's utilisation for a multilayer structure and the structure obtained therefrom

(84) Etats contractants désignés:
**AT BE CH CY DE DK ES FI FR GB GR IE IT LI LU MC NL PT SE**

(30) Priorité: **06.04.1999 FR 9904261**

(43) Date de publication de la demande:
**11.10.2000 Bulletin 2000/41**

(73) Titulaire: **Atofina**
**92800 Puteaux (FR)**

(72) Inventeurs:
• **Jammet, Jean-Claude**
**80000 Amiens (FR)**
• **Le Roy, Christophe**
**27000 Evreux (FR)**

• **Marical, Xavier**
**27410 Beaumesnil (FR)**
• **Pascal, Jérôme**
**27800 Saint Cyr de Salerne (FR)**

(74) Mandataire: **Neel, Henry**
**Atofina**
**D.C.R.D./D.P.I.**
**4, Cours Michelet,**
**La Défense 10**
**92091 Paris La Défense Cedex (FR)**

(56) Documents cités:
EP-A- 0 035 392   EP-A- 0 742 236
EP-A- 0 802 207   EP-A- 0 816 460
US-A- 4 460 632   US-A- 4 460 745
US-A- 4 487 885

**Description**

La présente invention concerne un liant de coextrusion, son utilisation pour faire une structure multicouche et la structure ainsi obtenue.

Plus précisément le liant de coextrusion de la présente invention comprend :

- 5 à 30 parties d'un polymère (A) lui-même comprenant un mélange d'un polyéthylène (A1) de densité comprise entre 0,910 et 0,940 et d'un polymère (A2) choisi parmi les élastomères, les polyéthylènes de très basse densité et les polyéthylènes métallocènes, le mélange (A1) + (A2) étant cogreffé par un acide carboxylique insaturé,
- 95 à 70 parties d'un polyéthylène (B) de densité comprise entre 0,910 et 0,930,
- le mélange de (A) et (B) étant tel que :

  · sa densité est comprise entre 0,910 et 0,930,
  · la teneur en acide carboxylique insaturé greffé est comprise entre 30 et 10000 ppm,

- le MFI (ASTM D 1238 - 190°C - 2,16 kg) est compris entre 0,1 et 3 g /10 mn. Le MFI désigne l'indice d'écoulement à l'état fondu et s'exprime en grammes par 10 minutes.

La présente invention concerne aussi une structure multicouche comprenant une couche comprenant le liant de coextrusion défini ci-dessus, et directement attachée à celle-ci une couche (E) de résine polaire azotée ou oxygénée telle qu'une couche d'une résine polyamide, d'une polycétone aliphatique, d'un copolymère saponifié d'éthylène et d'acétate de vinyle (EVOH) ou d'une résine polyester, ou bien une couche métallique.

L'invention concerne aussi une structure comprenant la structure précédente et directement attachée à celle-ci, du côté du liant, soit une couche (F) de polyoléfine, soit une couche d'une résine choisie parmi les résines de la couche (E) soit encore une couche métallique.

L'invention concerne aussi une structure comprenant respectivement une couche de polyoléfine (F), une couche du liant défini ci-dessus, une couche d'une résine polyamide ou d'un copolymère saponifié d'éthylène et d'acétate de vinyle (EVOH), une couche du liant défini ci-dessus et une couche de polyoléfine (F).

Ces structures sont utiles pour fabriquer des emballages souples ou rigides tels que des sachets, des bouteilles ou des containers. On peut fabriquer ces emballages par coextrusion, laminage, coextrusion soufflage.

L'invention est utile en particulier pour les tuyaux coextrudés et pour les réservoirs d'essence des automobiles.

Les réservoirs d'essence sont constitués le plus souvent de cinq couches qui sont respectivement :

- du polyéthylène haute densité (PEHD);
- un liant ;
- un polyamide (PA) ou un copolymère ayant des motifs éthylène et des motifs alcool vinylique (EVOH) ;
- un liant ;
- du PEHD.

Très souvent, on ajoute une sixième couche entre l'une des couches de liant et l'une des couches de PEHD. Cette sixième couche est constituée des chutes de fabrication consécutives au moulage des réservoirs, de réservoirs non conformes pour une beaucoup plus petite quantité. Ces chutes et réservoirs non conformes sont broyés jusqu'à obtenir des granulés. Ce broyat est ensuite refondu et extrudé directement sur l'installation de coextrusion des réservoirs. Ce broyat pourrait être aussi fondu et regranulé par une machine d'extrusion telle qu'une bi-vis avant d'être réutilisé.

Selon une variante, le produit recyclé peut être mélangé au PEHD des deux couches extrêmes du réservoir. On peut par exemple mélanger les granulés de produit recyclé aux granulés de PEHD vierge de ces deux couches. On peut aussi utiliser toute combinaison de ces recyclages.

Le taux de matière recyclée peut représenter jusqu'à 50 % du poids total du réservoir.

Cette sixième couche comporte donc l'ensemble des matériaux de la structure multicouches, PEHD, liants, PA ou EVOH.

L'art antérieur a déjà décrit des réservoirs d'essence multicouches. EP 834415 décrit des structures : Polyéthylène / liant / EVOH / liant /Polyéthylène.

Le liant est un polyéthylène greffé par de l'anhydride maléique de MFI 0,1 à 3, de densité comprise entre 0,920 et 0,930 et il contient 2 à 40 % en poids d'insolubles dans le n-décane à 90°C. Il est expliqué que le polyéthylène greffé est dissous dans le n-décane à 140°C, on le refroidit à 90°C, des produits précipitent ; puis on le filtre et le taux d'insolubles est le pourcentage en poids qui précipite et est recueilli par filtration à 90°C.

Si le taux est compris entre 2 et 40 % le liant a une bonne résistance à l'essence.

Aucun exemple ne montre un tel polymère. Le. texte précise que le liant est en fait un mélange de 2 à 30 parties d'un polyéthylène greffé de densité comprise entre 0,930 et 0,980 et de 70 à 98 parties d'un polyéthylène non greffé de densité comprise entre 0,910 et 0,940.

La demanderesse a essayé de préparer des liants et les structures correspondantes en suivant cet enseignement. Elle s'est aperçue que les liants n'étaient pas reproductibles c'est-à-dire que le choix du produit par sa densité n'est pas une indication suffisante. La demanderesse s'est aussi aperçue que ces critères n'étaient pas suffisants pour que le liant résiste à l'essence.

L'invention va maintenant être décrite en détails.

S'agissant du polymère (A1) c'est un polyéthylène homopolymère ou un copolymère de l'éthylène avec un comonomère choisi par example parmi :

- les alphaoléfines, avantageusement celles ayant de 3 à 30 atomes de carbone.

Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou de plus de deux.

- Les esters d'acides carboxyliques insaturés tels que par exemple les (méth)acrylates d'alkyle dont l'alkyle a de 1 à 24 atomes de carbone.

Des exemples d'acrylate ou méthacrylate d'alkyle utilisables sont notamment le méthacrylate de méthyle, l'acrylate d'éthyle, l'acrylate de n-butyle, l'acrylate d'isobutyle, l'acrylate de 2-éthylhexyle.

- Les esters vinyliques d'acides carboxyliques saturés tels que par exemple l'acétate ou le propionate de vinyle.

La densité de (A1) est avantageusement comprise entre 0,915 et 0,925.

Le MFI de (A1) : 0,1 à 8 g/10 mm.

(A1) est un copolymère de l'éthylène et d'une alphaoléfine de type LLDPE (polyéthylène basse densité linéaire).

A titre d'exemple d'élastomères (A2) on peut citer les copolymères éthylène/propylène (EPR), éthylène/propylène/diène, éthylène/1-butène, éthylène/ 1-butène/diène, éthylène/propylène/1-butène/diène, éthylène/ 4-méthyl-1-pentène, et des mélanges d'au moins deux de ces élastomères.

(A2) peut être aussi un copolymère à blocs styrène/butadiène/styrène (SBS), à blocs styrène/éthylène-butène/styrène (SEBS) ou encore à blocs styrène/isoprène/styrène (SIS).

(A2) est aussi choisi parmi les polyéthylènes VLDPE (très basse densité). Ce sont des copolymères d'éthylène et d'une alphaoléfine de densité comprise entre 0,860 et 0,910.

(A2) peut être aussi un polyéthylène métallocène.

On désigne par polyéthylène métallocène les polymères obtenus par copolymérisation d'éthylène et d'alphaoléfine telle que propylène, butène, héxène ou octène en présence d'un catalyseur monosite constitué généralement d'un atome d'un métal pouvant être par exemple du zirconium ou du titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.

Ces polyéthylènes métallocènes peuvent aussi être caractérisés par leur rapport $\frac{\overline{M}_w}{\overline{M}_n} < 3$ et de préférence < 2

La densité de (A2) est avantageusement comprise entre 0,860 et 0,880.

C'est-à-dire que (A2) représente une gamme de polymères allant des résines thermoplastiques aux élastomères. De préférence (A2) est un élastomère, les copolymères éthylène/propylène et aussi les éthylène octène et éthylène héxène et les copolymères éthylène/1-butène sont ceux que l'on préfère le plus. De préférence, le copolymère éthylène/propylène et le copolymère éthylène/1-butène ont un indice d'écoulement en masse fondue (mesuré à 190°C selon ASTM D1238-65T) de 0,1 à 20, et une teneur en éthylène de 60 à 90% en mole.

La densité de (A2) doit être choisie pour que le mélange de (A) (c'est-à-dire A1 + A2) et (B) ait une densité comprise entre 0,910 et 0,930 et de préférence entre 0,915 et 0,920. Le MFI de (A2) est de 0,1 à 20.

On utilise avantageusement 60 à 90 parties de (A1) pour 40 à 10 parties de (A2).

Le mélange de (A1) et (A2) est greffé avec un acide carboxylique insaturé ou un dérivé fonctionnel de cet acide, c'est-à-dire (A1) et (A2) sont cogreffés.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo (2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Des exemples d'autres monomères de greffage comprennent des esters alkyliques en $C_1$-$C_8$ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium. On préfère l'anhydride maléique.

Divers procédés connus peuvent être utilisés pour greffer un monomère de greffage sur le mélange de (A1) et (A2). Le mélange peut contenir les additifs utilisés habituellement lors la mise en oeuvre des polyoléfines à des teneurs comprises entre 10ppm et 5%, tels que les antioxydants à base de molécules phénoliques substituées, les agents de protections UV , les agents de mise en oeuvre tels que les amides gras ,l'acide stéarique et ses sels, les polymères fluorés connus comme agents pour éviter les défauts d'extrusion , les agents anti- buée à base d'amines, les agents anti-bloquants tels que la silice ou le talc, les mélanges maitres avec colorants, les agents nucleants.

Par exemple, ceci peut être réalisé en chauffant les polymères (A1) et (A2) à température élevée, environ 150° à environ 300°C, en présence ou en l'absence d'un solvant avec ou sans initiateur de radicaux. Des solvants appropriés qui peuvent être utilisés dans cette réaction sont le benzène, toluène, xylène, chlorobenzène, cumène. Des initiateurs de radicaux appropriés qui peuvent être utilisés comprennent le t(butyl-hydroperoxyde, cumène-hydroperoxyde, di-iso-propyl-benzène-hydroperoxyde, di-t-butyl-peroxyde, t-butyl-cumyl-peroxyde, (dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde, et méthyl-éthyl-cétone-peroxyde.

Dans le mélange de (A1) et (A2) modifié par greffage obtenu de la façon susmentionnée, la quantité du monomère de greffage peut être choisie d'une façon appropriée mais elle est de préférence de 0,01 à 10%, mieux de 600 ppm à 6 %, par rapport au poids de (A1) et (A2) greffés.

La quantité du monomère greffé est déterminée par dosage des fonctions succiniques par spectroscopie IRTF.

Le MFI de (A) c'est-à-dire de (A1) et (A2) ayant été cogreffés est 0,1 à 10. Quant au polyéthylène (B) il s'agit d'un polyéthylène homopolymère ou bien il peut être choisi parmi les copolymères de l'éthylène avec un monomère choisi parmi les alphaoléfines, les esters d'acides carboxyliques insaturés ou les esters vinyliques d'acides carboxyliques saturés. Ces monomères ont déjà été cités dans la définition de (A1) et (A2).

(B) est un LLDPE, copolymère de l'éthylène et d'une alphaoléfine.

Le MFI de (B) est compris entre 0,1 et 3.

Selon une forme avantageuse de l'invention le liant comprend 5 à 20 parties de (A) pour 95 à 80 parties de (B).

Selon une forme avantageuse de l'invention le comonomère de (A1) est le même que celui de (B) et est de préférence choisi parmi le 1-héxène, le 1-octène ou le 1-butène.

Selon une forme particulière de l'invention le polymère (A), c'est-à-dire (A1) et (A2) cogreffés, est tel que

(A1) comprend au moins 75% en mole d'éthylène et a un rapport $MFI_2/[\eta]^{-8,77}$ en valeur absolue supérieur à 15,
(A2) comprend au moins 50 % en mole d'éthylène

(A2) a un rapport $MFI_2/[\eta]^{-8,77}$ en valeur absolue supérieur à 15,
sa teneur en éthylène n'est pas inférieure à 70 % en mole
le rapport $MFI_{10}/MFI_2$ est compris entre 5 et 20, où $MFI_2$ est l'indice d'écoulement en masse fondue à 190°C sous une charge de 2,16 kg, mesuré suivant ASTM D1238, $MFI_{10}$ est l'indice d'écoulement en masse fondue à 190°C sous une charge de 10 kg suivant ASTM D1238. La viscosité intrinsèque [η] désigne l'indice de viscosité dl/g d'un polymère mesuré dans une solution de décaline à 135°C.

La structure multicouche de la présente invention comprend la couche comprenant le liant précédent, et une couche (E) de résine polaire oxygénée ou azotée, ou une couche métallique.

Des exemples de résines polaires préférées dans la couche autre que le liant sont les résines de polyamide, une polycétone aliphatique, un copolymère saponifié d'éthylène et d'acétate de vinyle, et les polyesters.

Plus spécifiquement, elles comprennent des polyamides synthétiques à longue chaîne ayant des motifs structurels du groupe amide dans la chaîne principale, tels que le PA-6, PA-6,6, PA-6,10, PA-11, PA-6/6,6 et le PA-12 ; un copolymère saponifié d'éthylène et d'acétate de vinyle ayant un degré de saponification d'environ 90 à 100% en moles, obtenu en saponifiant un copolymère éthylène/acétate de vinyle ayant une teneur en éthylène d'environ 15 à environ 60% en moles ; des polyesters tels que le polyéthylène-téréphtalate, le polybutylène-téréphtalate, le polyéthylène naphténate, des mélanges de ces résines, ou encore des polyesters aromatiques comme les cristaux liquides polymères.

La couche métallique peut être par exemple une feuille, une pellicule ou une feuille d'un métal tel que l'aluminium, le fer, le cuivre, l'étain et le nickel, ou un alliage contenant au moins un de ces métaux comme constituant principal. L'épaisseur de la pellicule ou de la feuille peut être convenablement choisie et elle est par exemple d'environ 0,01 à environ 0,2 mm. Il est de pratique courante de dégraisser la surface de la couche métallique avant de laminer sur elle le liant de l'invention. La couche de résine polaire oxygénée ou azotée (E) peut contenir également des additifs connus en quantité classique.

L'invention concerne aussi une structure comprenant respectivement une couche (F) de polyoléfine une couche du liant de l'invention et soit une couche (E) de résine polaire azotée ou oxygénée soit une couche métallique. Selon une autre forme particulière, l'invention concerne une structure comprenant respectivement une couche de PEHD, une couche du liant de l'invention, une couche d'EVOH ou d'un alliage d'EVOH, une couche du liant de l'invention et une couche de PEHD. Avantageusement elle se présente sous forme de corps creux rigides de volume 0,1 à 200 litres. L'épaisseur totale est comprise entre 0,2 et 20 mm, l'EVOH représentant 0,5 à 15 % de cette épaisseur, chaque couche de liant 0,2 à 10 %, et les deux couches de PEHD le complément.

Le MFI du PEHD est de préférence 3 à 17 g/10 min à 190°C ; 21,6 kg.

Le MFI de l'EVOH est de préférence 1 à 10 g/10 min à 190°C ; 2,16 kg.

Avantageusement la couche extérieure de PEHD peut être remplacée par deux couches, l'une extérieure en PEHD vierge éventuellement colorée, l'autre en produit recyclé provenant des chutes et des découpes lors de l'extrusion soufflage de ces corps creux. L'épaisseur de la couche extérieure de PEHD ajoutée à l'épaisseur de la couche de recyclé est essentiellement la même que dans le cas d'une seule couche extérieure de PEHD.

Ces structures sont utiles pour faire des réservoirs d'essence ou des tubulures de remplissage de réservoirs d'essence.

Les différentes couches des structures de l'invention peuvent contenir des additifs tels que des charges, des stabilisants, des agents glissants, des agents antistatiques, des ignifugeants.

Les structures de l'invention peuvent être fabriquées par des procédés connus de coextrusion, d'extrusion soufflage, de la technique des thermoplastiques.

Exemples

Les exemples présentés correspondent à des structures 5 couches issues de flacons réalisés par extrusion soufflage dans les conditions suivantes.

***Structure du flacon***

- 3 constituants, 5 couches
- PEHD / liant / EVOH / liant / PEHD
- Epaisseurs : 1,2/0,1/0,15/0,1/1,2mm
- PEHD : densité = 0,945 - 0,950 MFI = 5 - 6 g/10 min (190°C, 21.6 kg)
- EVOH : taux d'éthylène = 29 % MFI = 1,7 g/10 min (190°C, 2.16 kg)

***Type de flacon***

Cylindrique ($\varnothing$ = 70 mm) avec 2 faces planes, 0,7 litre, hauteur = 270 mm, poids = 170 g.

**Conditions d'extrusion souffage**

| Profils de température (°C): | | | | | | |
|---|---|---|---|---|---|---|
| | | | | | | Tête |
| PEHD | 200 | 210 | 220 | 230 | 230 | 230 |
| Liant | 210 | 220 | 220 | 220 | 220 | 230 |
| EVOH | 180 | 190 | 200 | 210 | 220 | 230 |

Outillage                 Diamètre de la filière = 20 mm
Diamètre du poinçon = 12 mm
Entrefer = 4 mm
Taux d'étirement par soufflage :   environ 3

**Mesure de la résistance au pelage entre couches**

- Eprouvettes de 15 x 150 mm découpées dans les parties planes du flacon et conditionnées au moins 24 heures à 23°C, 50 % H.R.
- Amorçage au cutter à l'une des interfaces entre liant et EVOH
- Pelage « en T » à une vitesse de traverse de 50 mm/min. La résistance au pelage, exprimée en N/cm, est donnée par la valeur au plateau de la force de pelage, en excluant le pic de démarrage. Les résultats figurent sur le tableau-1 suivant dans lequel "AM" désigne l'anhydride maleique et le pourcentage poids du mélange cogréffé désigne la proportion de A dans le mélange A+B.

| Formulations | | Exemple 1 | Exemple 2 | Exemple 3 | Exemple 4 |
|---|---|---|---|---|---|
| Polymère A1 | Comonomère | 1-octène | 1-butène | 1-hexène | 1-octène |
| | Densité (g/cm3) | 0,919 | 0,917 | 0,918 | 0,919 |
| | MFI (g/10min ; 2,16kg) | 4,4 | 2,5 | 3 | 4,4 |
| | % en poids | 75 | 90 | 80 | 75 |
| Polymère A2 | Comonomère | propylène | 1-butène | 1-octène | 1-octène |
| | Densité (g/cm3) | 0,880 | 0,900 | 0,870 | 0,870 |
| | MFI (g/10min ; 2,16kg) | 0,2 | 2,8 | 5 | 5 |
| | % en poids | 25 | 10 | 20 | 25 |
| Mélange cogreffé A | Taux d'AM (ppm) | 3800 | 7500 | 4000 | 8000 |
| | % en poids | 20 | 10 | 15 | 15 |
| Polymère B | Comonomère | 1-octène | 1-butène | 1-hexène | 1-octène |
| | Densité (g/cm3) | 0,919 | 0,919 | 0,921 | 0,920 |
| | MFI (g/10min ; 2,16kg) | 1,1 | 1 | 0,5 | 1 |
| Mélange A + B | Densité (g/cm3) | 0,917 | 0,919 | 0,919 | 0,918 |
| | MFI (g/10min ; 2,16kg) | 1,0 | 0,8 | 0,5 | 1,1 |
| | Taux d'AM (ppm) | 760 | 750 | 600 | 1200 |
| Résistance au pelage | (N/cm) | 50 | 47 | 45 | 49 |

**Revendications**

1. Liant de coextrusion comprenant :

   - 5 à 30 parties d'un polymère (A) lui-même comprenant un mélange d'un polyéthylène basse densité linéaire, copolymère de l'éthylène et d'une alphaoléfine (A1) de densité comprise entre 0,910 et 0,940 et de MFI (A1) compris entre 0.1 et 8 g/10 min et d'un polymère (A2) choisi parmi les élastomères, les polyéthylènes de très basse densité, copolymères d'éthylène et d'une alphaoléfine de densité comprise entre 0.860 et 0.910 et les polyéthylènes métallocènes, avec un MFI (A2) compris entre 0.1 et 20 g/10 min le mélange (A1) + (A2) étant cogreffé par un acide carboxylique insaturé, ou un dérivé fonctionnel de cet acide ;
   - 95 à 70 parties d'un polyéthylène basse densité linéaire, copolymère de l'éthylène et d'une alphaoléfine (B) de densité comprise entre 0,910 et 0,930 et de MFI (B) compris entre 0.1 et 3 g/10 min;

   le mélange de (A) et (B) étant tel que:

   · sa densité est comprise entre 0,910 et 0,930,
   · la teneur en acide carboxylique insaturé greffé est comprise entre 30 et 10000 ppm,
   · le MFI (ASTM D 1238 - 190°C - 2,16 kg) est compris entre 0,1 et 3 g 10 min, le MFI désignant l'indice d'écoulement à l'état fondu.

2. Liant selon la revendication 1 tel que sa densité est comprise entre 0,915 et 0,920.

3. Liant selon la revendication 1 ou 2 dans lequel le comonomère de (A1) est le même que celui de (B).

4. Liant selon l'une quelconque des revendications précédentes dans lequel (A) c'est-à-dire (A1) + (A2) cogreffés est tel que

   (A1) comprend au moins 75% en mole d'éthylène et a un rapport $MFI_2/[\eta]^{-8,77}$ en valeur absolue supérieur à 15,
   (A2) comprend au moins 50 % en mole d'éthylène
   (A2) a un rapport $MFI_2/[\eta]^{-8,77}$ en valeur absolue supérieur à 15,
   sa teneur en éthylène n'est pas inférieure à 70 % en mole
   le rapport $MFI_{10}/MFI_2$ est compris entre 5 et 20, où $MFI_2$ est l'indice d'écoulement en masse fondue à 190°C sous une charge de 2,16 kg, mesuré suivant ASTM D1238, $MFI_{10}$ est l'indice d'écoulement en masse fondue à 190°C sous une charge de 10 kg suivant ASTM D1238. La viscosité intrinsèque $[\eta]$ désigne l'indice de viscosité dl/g d'un polymère mesuré dans une solution de décaline à 135°C.

5. Structure multicouche comprenant une couche comprenant le liant de l'une quelconque des revendications précédentes, et directement attachée à celle-ci une couche (E) de résine polaire azotée ou oxygénée telle qu'une couche de résine polyamide, d'une polycétone aliphatique, d'un copolymère saponifié d'éthylène et d'acétate de vinyle (EVOH) ou d'une résine polyester, ou bien une couche métallique.

6. Structure selon la revendication 5 dans laquelle est directement attachée, du côté du liant, soit une couche (F) de polyoléfine, soit une couche d'une résine choisie parmi les résines de la couche (E) soit une couche métallique.

7. Structure selon la revendication 6 comprenant respectivement une couche de PEHD, une couche du liant de l'invention, une couche d'EVOH ou d'un alliage d'EVOH, une couche du liant de l'invention et une couche de PEHD.

8. Corps creux rigides constitués d'une structure selon l'une quelconque des revendications 5 à 7.

9. Réservoir d'essence comprenant une structure selon la revendication 7.

**Claims**

1. Coextrusion tie comprising:

   - 5 to 30 parts of a polymer (A), itself comprising a blend of a linear low-density polyethylene, ethylene/α-olefin copolymer (A1) of density between 0.910 and 0.940 and of MFI (A1) between 0.1 and 8 g/10 min, and of a polymer (A2) chosen from elastomers, very low-density polyethylenes, ethylene/$\alpha$-olefin copolymers of density between 0.860 and 0.910 and metallocene polyethylenes, with an MFI (A2) of between 0.1 and 20 g/10 min, the A1/A2 blend being cografted with an unsaturated carboxylic acid or a functional derivative of this acid;
- 95 to 70 parts of a linear low-density polyethylene, ethylene/$\alpha$-olefin copolymer (B) of density between 0.910 and 0.930 and of MFI (B) of between 0.1 and 3 g/10 min;

the blend of (A) and (B) being such that:

. its density is between 0.910 and 0.930,
. the content of grafted unsaturated carboxylic acid is between 30 and 10,000 ppm,
. the MFI (ASTM D 1238; 190°C/2.16 kg) is between 0.1 and 3 g/10 min, MFI standing for the melt flow index.

2. Tie according to Claim 1, such that its density is between 0.915 and 0.920.

3. Tie according to Claim 1 or 2, in which the comonomer of (A1) is the same as that of (B).

4. Tie according to any one of the preceding claims, in which (A), that is to say cografted (A1)/(A2), is such that:

(A1) comprises at least 75 mol% of ethylene and has an $MFI_2/[\eta]^{-8.77}$ ratio greater than 15 in absolute value;
(A2) comprises at least 50 mol% of ethylene;
(A2) has an $MFI_2/[\eta]^{-8.77}$ ratio greater than 15 in absolute value;
its ethylene content is not less than 70 mol%;
the $MFI_{10}/MFI_2$ ratio is between 5 and 20, where $MFI_2$ is the melt flow index at 190°C under a load of 2.16 kg, measured according to ASTM D 1238, $MFI_{10}$ is the melt flow index at 190°C under a load of 10 kg according to ASTM D 1238 and the intrinsic viscosity [$\eta$] denotes the viscosity index in dl/g of a polymer measured in a decalin solution at 135°C.

5. Multilayer structure comprising a layer comprising the tie of any one of the preceding claims and, directly attached to the latter, a layer (E) of nitrogen-containing or oxygen-containing polar resin, such as a layer of polyamide resin, of an aliphatic polyketone, of a saponified ethylene-vinyl acetate copolymer (EVOH) or of a polyester resin, or else a metal layer.

6. Structure according to Claim 5, in which either a polyolefin layer (F) or a layer of a resin chosen from the resins of the layer (E) or a metal layer is directly attached on the tie side.

7. Structure according to Claim 6, respectively comprising an HDPE layer, a layer of the tie of the invention, a layer of EVOH or of an EVOH alloy, a layer of the tie of the invention and an HDPE layer.

8. Rigid hollow bodies consisting of a structure according to any one of Claims 5 to 7.

9. Petrol tank comprising a structure according to Claim 7.


**Patentansprüche**

1. Koextrusionsbindung, die Folgendes umfasst:

- 5 bis 30 Teile eines Polymers (A), das wiederum selbst eine Mischung aus einem Polyethylen mit niedriger linearer Dichte, einem Ethylencopolymer und einem Alphaolefin (A1) mit einer Dichte zwischen 0,910 und 0,940 und mit einem MFI (A1) zwischen 0,1 und 8 g/10 min aufweist, und eines Polymers (A2), das aus den Elastomeren, Polyethylenen mit sehr niedriger Dichte, Ethylencopolymeren und einem Alphaolefin mit einer Dichte zwischen 0,860 und 0,910 und Metallocen-Polyethylenen mit einem MFI (A2) zwischen 0,1 und 20 g/10 min ausgewählt wird, wobei die Mischung aus (A1) + (A2) durch eine ungesättigte Carbonsäure oder ein funktionelles Derivat dieser Säure mit aufgepfropft ist;

- 95 bis 70 Teile eines Polyethylens mit niedriger linearer Dichte, eines Ethylencopolymers und eines Alphaolefins (B) mit einer Dichte zwischen 0,910 und 0,930 und einem MFI (B) zwischen 0,1 und 3 g/10 min;

wobei die Mischung aus (A) und (B) so ist, dass

- ihre Dichte zwischen 0,910 und 0,930 liegt,

- der Gehalt an ungesättigter aufgepfropfter Carbonsäure zwischen 30 und 10.000 ppm liegt,

- der MFI (ASTM D 1238 - 190°C - 2,16 kg) zwischen 0,1 und 3 g/10 min liegt, wobei der MFI den Abflussindex in geschmolzenem Zustand bezeichnet.

2. Bindung nach Anspruch 1, wobei ihre Dichte zwischen 0,915 und 0,920 liegt.

3. Bindung nach Anspruch 1 oder 2, wobei das Comonomer von (A1) dasselbe wie jenes von (B) ist.

4. Bindung nach einem der vorhergehenden Ansprüche, wobei (A), das heißt mit aufgepfropftes (A1) + (A2), so ist, dass

(A1) mindestens 75 Molprozent Ethylen umfasst und ein Verhältnis von $MFI_2/[?]^{-8,77}$ mit einem absoluten Wert von mehr als 15 aufweist,

(A2) mindestens 50 Molprozent Ethylen umfasst,

(A2) ein Verhältnis von $MFI_2/[?]^{-8,77}$ mit einem absoluten Wert von mehr als 15 aufweist,

sein Ethylengehalt nicht unter 70 Molprozent liegt,

das Verhältnis $MFI_{10}/MFI_2$ zwischen 5 und 20 liegt, wobei $MFI_2$ der Abflussindex geschmolzener Masse bei 190°C unter einer Last von 2,16 kg ist, gemessen gemäß ASTM D1238, $MFI_{10}$ der Abflussindex geschmolzener Masse bei 190°C unter einer Last von 10 kg gemäß ASTM D1238 ist und die Grundviskosität [?] bezeichnet den viskositäts index dl/g eines Polymers, gemessen in einer Dekalinlösung bei 135°C.

5. Multischichtstruktur, umfassend eine Schicht, welche die Bindung eines der vorhergehenden Ansprüche umfasst, und direkt an dieser angebracht eine Schicht (E) aus polarem stickstoffhaltigem oder sauerstoffhaltigem Harz, wie eine Schicht aus Polyamidharz, aus einem aliphatischen Polyceton, aus einem verseiften Ethylen- und Vinylacetat-Copolymer (EVOH) oder aus einem Polyesterharz, oder eine Metallschicht.

6. Struktur nach Anspruch 5, wobei auf der Seite der Bindung entweder eine Schicht (F) Polyolefin oder eine Schicht eines Harzes, welches aus den Harzen der Schicht (E) ausgewählt wird, oder eine Metallschicht direkt angebracht ist.

7. Struktur nach Anspruch 6, umfassend jeweils eine PEHD-Schicht, eine Schicht der Bindung der Erfindung, eine EVOH-Schicht oder eine EVOH-Legierungs-Schicht, eine Schicht der Bindung der Erfindung und eine PEHD-Schicht.

8. Hohle starre Körper, die aus einer Struktur nach einem der Ansprüche 5 bis 7 hergestellt sind.

9. Kraftstoffbehälter, der eine Struktur nach Anspruch 7 umfasst.